# EUROPEAN PATENT SPECIFICATION

(11) **EP 1 317 388 B1**
(45) Date of publication and mention of the grant of the patent: **09.08.2006**
(21) Application number: 01920072.4
(22) Date of filing: 06.04.2001
(51) Int. Cl.: B65D 85/50, A01G 5/04

(54) **STICK-LINE PACKAGING FOR FLOWER SUBSTRATES**
STIFTARTIGE VERPACKUNG FÜR BLUMENSUBSTRATE
EMBALLAGE DE TYPE BATON DESTINE AUX SUBSTRATS NUTRITIFS DE FLEURS

(30) Priority: 21.08.2000 SE 0002953
(43) Date of publication of application: 11.06.2003
(73) Proprietor: Zetterquist, Lars, Twickenham, middlesex TW1 2AR (GB)
(72) Inventor: Zetterquist, Lars, Twickenham, middlesex TW1 2AR (GB)
(74) Representative: Karlsson, Leif Karl Gunnar
(86) International application number: PCT/SE2001/000778
(87) International publication number: WO 2002/016228

(56) References cited:
- WO-A1-98/09504
- US-A- 2 691 849
- US-A1- 1 885 879
- US-A1- 3 177 617

## Description

The present invention relates to a package for flower nutrient or flower substrate and of a design exposing the features mentioned in the preamble of claim 1.

### Prior art.

In order to preserve quality of cut flowers and to extend vase life flower nutrients or flower substrates are commonly used.

Flower food contains nutrients and other vase life extending and quality improving compounds.

Usually these powder-like products are packed in dry state in small polyethylene sachets. The customer opens the sachet using scissors and empties its content in the vase water in which it dissolves slowly.

In order to speed up this process usually one needs vigorous stirring and mixing with a spoon or by shaking the vase.

This handling is considered by the consumer as inconvenient and prevents from wider use of flower foods.

In mass merchandising channels the sachets cause inconvenience. They are usually added to the flowers along the packaging line by manual labour. This requires picking up the bouquet or bunch and wrapping tape around the sachet and the bunch or adhering it to the sleeve, the plastic cover of the bouquet. Often the sachet is attached to the inside of the sleeve, in order to prevent loss of the sachet during further handling or transport.

The sachet has a content adapted for 0.5 or 1 litre of vase water, although often much larger volumes are used. The volume of the vase of choice relates to the size of the bouquet. Often the dosage is not correct and thus ineffective and to high dosage might even cause damage to the flowers.

Sachets are attached to the packed bouquets or flower bunches with a tape that is wrapped around the stems. This is usually done in a packing line.

The prior art hereunder described distinctly differ from our invention:

Patent No. DE-A1-3047700 describes a product composed of pressed flower food chemicals, shaped as a flower stem that can be packed in between flowers in a bunch and will dissolve or release its content when submerged in the vase water with the flowers. The flower stem shaped device can be applied as pressed material or as sachet. The foil of the sachet can be either water permeable or perforated.

The product can have a sachet or tube like appearance and it is kept between the flowers and is submerged in the vase water.

The product as described will cause very high concentrations in its direct surrounding and especially at the bottom of the vase due to the slow and limited solubility of the compounds or nutrient.

The invention described in patent DE-A1-3047700 is meant to be as invisible as possible.

Another prior art, on described in Patent No. NL-C-1001135 relates to a package for flower food, comprising a long closed container for flower food as well as an extension at the end of the container that can be shortened to match the length of the stems of the flower bunch to which the packaging can be added.

The container is a tube closed at both ends. Additionally extension peace can be part of the tube or mounted to the tube.

This prior art describes a tube like container for flower nutrients. The origin of the idea is to lower the packing cost at the flower packing stations.

It mentions the ease of handling and the low cost for addition to the bunch in the packing process. It makes no reference to a stirring and dispersing function nor of any other advantages regarding application (length related dosage, attention function as a holder of information). Said prior art makes no reference to the shape of the heat seal.

Patent NL-C-1002643 describes a package for flower food or nutrient of a sachet type as well as a process for production and simultaneous filling of such packaging.

A package for plant (= flower) food comprising a sealed first compartment that is protected to contain flower food and a second compartment free of plant food and a process for fully continuous forming and filling.

This prior art is mainly aiming at lowering the costs for packing by preventing costs for mounting sachets to the sleeve of bouquets. It can be treated as a flower stem and added at the same cost as flower stems. The sachet as such is not stiff but acquires some strength due to the densely packed flower food.

The patent in question describes a two-compartment container of which one is empty. This is needed to prevent loss of content when, after the sachet has been inserted between the flowers, the bunches are cut to the right size.

The container according to this prior art should have a volume to contain just the desired amount of flower food, or nutrient.

Filling a sachet to a fixed maximal content is easier than filling by stopping the flow of nutrient powder.

Also this prior art refers to the use of foils. In order to have sufficient tearing resistance a two layer foil is used. Preferably with a polyester second layer.

These foils are expensive.

Both patents (NL-C-100135 and (NL-C-1002643) describe rod like containers that have been developed from a packaging technological perspective and the resulting products lack any product related or consumer-oriented properties.. They both have an extension as an essential part,

Prior art concerning stirring containers are targeted to the markets of disposables and cutlery and the (fast) food market: coffee, tea and other drinks:
EP-A1-0003390 describes a stirring container,
GB-A-257020 describes a disposable spoon with condiment.

It is heat sealed at one end only and at the other end it is closed by an edible and soluble sealer.

This spoon is designed for drinks. Examples and corresponding drawings referred to in the claims are all related to the food market.
US -A-05866185 A is an improvement of prior art by addition of a soluble coating over the perforations. This (group of) inventions relate to a stirring device for dissolving in an ingestible liquid, thus aiming at the food market.
G 90 02 3021 describes a limited food application of a stirring rod in this case for coffee cream (Kaffeesahne).
DE -Al- 2635417 relates to food applications where flavours or aromas are coated or pressed on a rod of about the size of a teaspoon (Kaffeelöffellangen Stäbchens).
-Al-DE 3841075 describes a rod for food application. This product comprises one or more chambers that contain liquid or solid food or nutrient components, like sugar and milk, to combine packaging function for these components and the stirring function of the spoon.
Japan 06244535 describes that a the rod is incorporated in the package and is not a packaging itself.

The above-mentioned patents relate to either stirring containers or flower food containers. The invention adds to the prior art considerable novel dimensions as mentioned above.

According to the invention the package is designed like a hollow stick, to be used as a stirring device to enhance the solution of a flower or nutrient substrate, while dissolving its content in water for cut flowers kept in a vase, in order to extend vase life-length of the flowers.

The present invention solves the problem presented above by integrating several functional properties in the package and has in addition further advantages:
1. Ease of handling and attachment will reduce packaging costs.
2. The relatively stiff hollow stick or rod will allow stirring and thereby rapid dissolution of substrate or nutrient.
3. The hollow stick appears to be an ideal communication device.
4. The size of the hollow stick allows easy dosage.

The stick according to the invention is in contrast to sachets easy to put in between the cut flowers in packed bouquets. In larger flower supply chains of mass merchandisers or supermarkets,where flower bouquets are pre-packed in specialised packaging stations, the use of the hollow stick will significantly reduce handling cost (labour costs) as it prevents the attachment of the sachets with tape to the bouquet or the package (sleeve).

The contents of the stick can be easily emptied in the water by gently squeezing at the seal and breaking the junction while at the same time the stick can be used as a stirring rod to add extra energy for the dissolution process. This property adds considerably to the perceived convenience of the product.

The stick protrudes slightly above the flowers of the bouquet and is clearly visible.

It can therefore be used to draw attention of the consumers e.g. by using it for attachment of information and communication items or to give it an appealing (funny) design or to add (fun) articles.

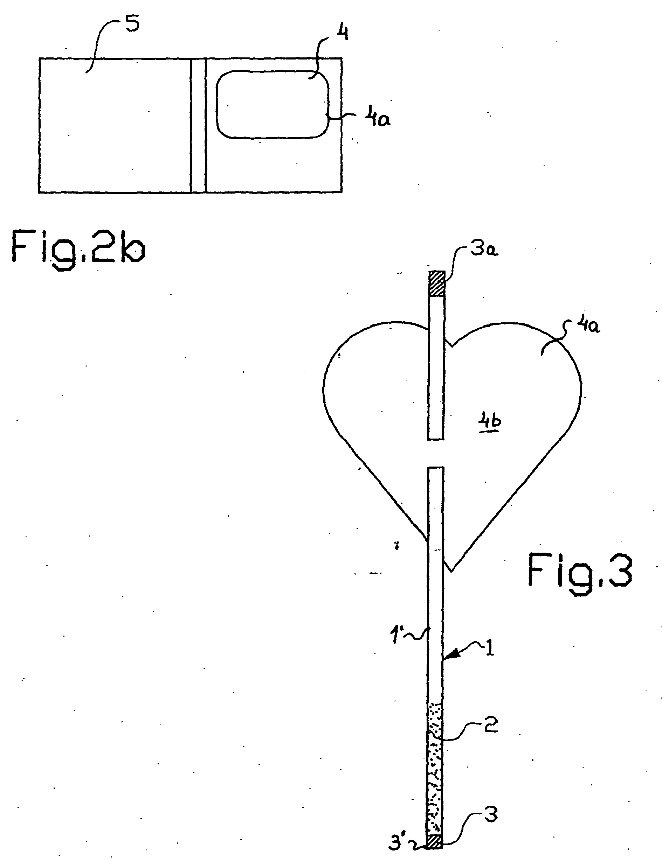

It could display brand labels or other advertisements, care instructions and other information for the consumer, bar codes and tracking and tracing information and other information related to the quality management of the chain, and small (fun) articles like name tags, invitation cards, toy's, comic characters and other gimmicks. Also it could be designed as flag, traffic sign, magic stick, pencil, love arrow with a small heart (see Fig. 3), etc.

Since there is a relation between the size of the bouquet and the size of the vase chosen for it, the dosage of the flower food is more correct if the size of the bouquet is taken as the reference.

The hallow sticks can be made in various lengths and diameters, containing an amount of sugar or nutrient that relates to the average and minimum volume of the vase taken by the customer for those size bouquets. This will prevent harmful over dosage of nutrients and other components.

It is to be noted that the present invention is based upon a package where its content and the nutrient is emptied in the water and disposed, and being able to add an extra force to the mixing process by stirring and dispersion of the particles enhancing the dissolution.

The package is intended to be used as a clearly visible device

The package is sealed by a heat seal and this seal should be shaped in such a way that it provides a flat or ribbed stirring surface and should be water tight but easily opened.

The package is formed from a single layer of extruded commodity polymers.

### Solution

The present invention is based upon a package for flower nutrient as stated in the preamble of claim 1 and has as its significant features the particulars mentioned in the characterising part of claim 1.

Suggested embodiments falling within the scope of the present invention are stated in the subclaims.

### Brief Description of the Drawings

Below the invention will be described more in detail with reference to the illustrated embodiments and accompanying drawings, where;
Fig. 1 shows the relationship between the length of a bouquet (stem length) and the vase volume, chosen for a particular bunch.
Fig. 2a shows a specific example of a first package, according to the invention,
Fig. 2b shows a plan view of a foldable flyer, to be attached to a package related hollow stick, and
Fig. 3 shows another package, according to the invention.

### Description of the preferred embodiments

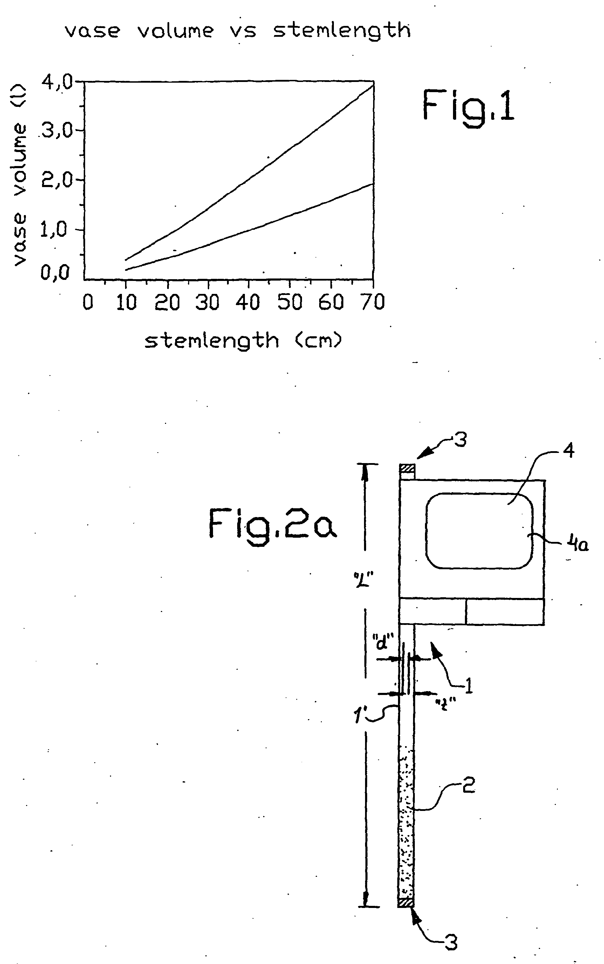

According to the graph of Fig. 1 the amount of nutrients required optimally for a specific length can be derived from the average vase volume, corresponding to that length.

For flowers of 50 cm length, a volume is chosen between 1.0 and 2.5 litre.

If the optimal sugar or nutrient content of the vase water for the particular flowers is 10 grams per litre, the hollow stick should contain 15 grams.

If the flowers are sensitive to excess of biocide, one can determine the dosage of the biocide from the lower volume line.

If a minimal content of a compound is required, one can calculate the dosage from the upper volume line.

It should be realised that this graph is only given as an example, this information appears to be more specific. Types of vases and volumes vary per type of flower or per country.

Fig. 2a shows a polypropylene hollow stick 1' formed as a pipe of 50 cm and 6mm diameter with a wall thickness of 0.3 mm.

In the embodiment according to Fig. 2a, the pipe is filled with 15 gram sugar (sucrose) or nutrient 2 and were heat sealed at both ends 3.3a, with a ribbed sealing device, to create a small flat stirring surface 3.

An information leaflet 4 (6 cm x 12 cm, creased and folded in the middle) with consumer instructions about the use of the hollow stick 1' and with information 4a on flower care in general, is attached to the stick.1'.

The stick is used for pre-packed roses with an average stem length of 45 cm and with ten roses per bunch and in pre packed mixed bouquets, with an average length of 45 cm.

The stick does not tear or break upon putting or pushing it between the flowers.

In packing lines they can be handled like individual flowers and at the same cost, thereby reducing the packaging costs and speeding up the packaging process as compared to sachet attachments. The stick cause no inconvenience and is not damaged during transportation.

In the display 4, the information 4a leaflets are very clearly visible and have a nice appealing presence.

The stick can be conveniently opened by gently squeezing the seal and breaking the junction.

The chosen dimensions allow vigorous stirring without breaking or folding of the pipe due to its stiffness.

The sugar thus released is easily dispersed and dissolves more rapidly due to the stirring action and stirring with the rod over or stick the bottom of the vase

The concentration of the sugar or nutrient in the vase water appeares to be between 0.7 and 12 grams per litre, on average 10 grams per litre in the vases chosen for the flowers by (Dutch) consumers.

The invention is a stick like package 1 that can contain 4-20 grams of sugar or other nutrients 2 (for ca. 0.4-2 litres) in solid or liquid form.

The length "2" of the stick 1' is preferably between 15 and 60 cm with a diameter "d" of 4-10 mm. In order to obtain a sufficient stiffness, the wall thickness "2" should be between 0.1 and 1.0 mm.

The stick 1' has a cylindrical shape but can also be shaped as a beam or a spiral or as a spoon or a flower stem or any other long shape (not shown).

Also in cross section it is circular or star-shaped with or without ribs to reinforce the stick and increase the stiffness and may have flights to improve the stirring properties.

The stick is made of any type of plastic e.g. commodity polymers polyethylene, polypropylene, polystyrene, or a biodegradable polymer like polylactic acid or a thermoplastic starch.

The stick 1' is closed at both sides or ends by a thermo seal 3, 3a (heat seal) and/or a stopper (not shown). It can be opened by removing the stopper or squeezing the seal 3.3a and breaking the junction.

The sticks 1' should have sufficient overall stiffness in order to prevent breaking or kinking during stirring.

This translates into a required minimal flexural modulus of the walls for each length of the stick.

For polypropylene sticks with a diameter of 6 mm and a length of 10-30 cm a wall thickness of 0.15-0.2 mm is enough.

Sticks of 30-50 cm are preferably between 6 and 8 mm in diameter and require a wall thicknes exceeding 0.2 mm. Still longer sticks have preferably a wall thickness of at least 0.25 mm.

Fig. 3 shows a polypropylene stick 1' of 40 cm and 6mm diameter with a wall thickness of 0.3 mm.

In the embodiment according to Fig. 3, the hollow farmed stick or pipe were filled with 15 gram sugar² (sucrose) and were heat-sealed at one end 3 with a ribbed sealing device to create a small flat stirring surface 3' and closed with an arrowhead-shaped stopper at the other side.

To the stick 1' a heart-shaped valentines card 4a is attached with empty space 4b for a message as well as consumer instructions about the use of the stick and flower care instructions.

The stick is used for pre-packed roses with an average stem length of 40 cm and with ten roses per bunch,with an average length of 40 cm.

The sticks 1' do not tear or break upon putting or pushing them between the flowers. In packing lines they can be handled like individual flowers and at the same cost, thereby reducing the packaging costs and speeding up the packaging process as compared to sachet attachment. The sticks cause no inconvenience and are not damaged during transportation.

In a display 4, information leaflet 5 is very clearly visible and have a nice appealing presence.

The sticks 1' can be conveniently opened by gently squeezing the seal 3 and breaking the junction or removing the arrowhead.

The chosen dimensions allow vigorous stirring without breaking or folding due to its stiffness. The sugar thus released is easily dispersed and dissolves more rapidly due to the stirring action and stirring with the stick 1' over the bottom of the vase.

The concentration of the sugar in the vase water on average became 9 grams per litre in the vases chosen for the flowers by consumers.

According to a third embodiment (no shown in a drawing) a polypropylene stick of 20 cm and 6 mm cm diameter "d" with a wall thickness of 0.3 mm is filled with 7 grams of suga 2. (sucrose), being heat sealed at one end 3 with a heat-sealing device to create a small flat stirring surface on both sides.

The sticks are to be used in pre-packed bouquets with an average stem length of 20 cm.

The concentration of the sugar in the vase water on average became 10 grams per litre in the vases chosen for the flowers by consumers.

## Claims

1. A package for flower nutrient, said package being designed as a longitudinal receptacle in the form of a hollow stick (1'), said nutrient (2) is caused to be dissolvable in water, in order to extend vase life-length of cut flowers, adapted to releasably secure the flower nutrient (2) therein, said hollow stick (1') exposes a flat end-related surface, being formed by a heat seal, to secure the flower nutrient inside said hollow stick, **characterized in that** said hollow stick is formed stiff enough to agitate said water, into which said flower nutrient is dispensed, and to serve as a stirring device, that the physical inner dimension of said hollow stick (1') is adapted to contain the total amount of said flower nutrient (2), containing 4 to 20 grams of flower nutrient, in dry or liquid form, that said hollow stick (1') is exposing a cross-section and a diameter of 4 to 10 mm, that a wall thickness is chosen within 0,1 to 1,0 mm, that said hollow stick (1') is adapted to serve as an attachment means for an information display (4, 5), said hollow stick allows a proper fore dosage of nutrients, based on the length of the flowers, and that said hollow stick is chosen with a longitudinal length of between 15 and 60 cm.

2. A package according to Claim 1, **characterized in that** said hollow stick has a cross-section related shape of a cylinder, a beam, a spiral, a spoon or a flower stem and exposing a circular or oval, square, rectangular or star-shaped cross-section.

3. A package according to Claims 1 or 2, **characterized in that** said hollow stick exposes reinforcements, like ribs, flights or other details, to improve its strength and stirring properties.

4. A package according to Claim 1, **characterized in that** said hollow stick contains nutrient that relates to the average and minimum volume of the vase used.

5. A package according to Claim 1, **characterized in that** said heat seal is shaped in such a way that it provides a flat or ribbon stirring surface and is formed water tight but easily opened.

6. A package according to Claim 1, **characterized in that** said hollow stick is formed as a polypropylene pipe.

## Patentansprüche

1. Eine Packung für Pflanzennährstoff, wobei die Packung als längslaufender Behälter in Form eines hohlen Stabes (1') ausgebildet ist, der Nährstoff (2) in Wasser zur Lösung gebracht wird, um die Lebensdauer von Schnittblumen in Vasen zu verlängern, angepasst, um den Blumennährstoff (2) darin freigebbar zu sichern, wobei der hohle Stab (1') eine flache, Ende bezogene Oberfläche zeigt, die durch eine Wärmedichtung gebildet ist, um den Blumennährstoff in dem hohlen Stab festzuhalten, **dadurch gekennzeichnet, dass** der hohle Stab steif genug zum Rühren von Wasser ausgebildet ist, in welches der Blumennährstoff dispergiert wird und um als Rührvorrichtung zu dienen, dass der physikalische Innendurchmesser des hohlen Stabes (1') daran angepasst ist, die Gesamtmenge des Blumennährstoffes, welcher 4 bis 20 g Blumennährstoff in trockener oder flüssiger Form enthält, aufzunehmen, dass der hohlen Stab (1') einen Querschnitt und einen Durchmesser von 4 bis 10 mm zeigt, dass die Wanddicke zwischen 0,1 bis 1,0 mm ausgewählt ist, dass der hohle Stab (1') daran angepasst ist, als Befestigungsmittel für ein Informationsdisplay (4, 5) zu dienen, wobei der hohle Stab eine genaue Vordosierung von Nährstoffen, basierend auf der Länge der Blumen erlaubt und dass der hohle Stab in einer Länge von zwischen 15 und 60 cm ausgewählt ist.

2. Packung nach Anspruch 1, **dadurch gekennzeichnet, dass** der hohle Stab eine Querschnitt bezogene Form eines Zylinders, eines Balkens, einer Spirale, eines Löffels oder eines Blumenstiels besitzt und einen runden oder ovalen, quadratischen, rechteckigen oder sternförmigen Querschnitts zeigt.

3. Packung gemäß Anspruch 1 oder 2, **dadurch gekennzeichnet, dass** der hohle Stab Versteifungen, wie Rippen, Pfeile oder andere Details zeigt, um seine Festigkeit und Rühreigenschaften zu verbessern.

4. Packung gemäß Anspruch 1, **dadurch gekennzeichnet, dass** der hohle Stab Nährstoff enthält, der auf das Mittel- und Minimumvolumen der verwendeten Vase bezogen ist.

5. Packung nach Anspruch 1, **dadurch gekennzeichnet, dass** die Wärmedichtung in solcher Weise geformt ist, dass sie eine flache oder bandartige Rühroberfläche liefert und wasserdicht aber leicht zu öffnend ausgebildet ist.

6. Packung gemäß Anspruch 1, **dadurch gekennzeichnet, dass** der hohle Stab als Polypropylenrohr ausgebildet ist.

## Revendications

1. Conditionnement pour substance nutritive destinée à des fleurs, ledit conditionnement étant conçu comme un récipient longitudinal sous la forme d'un bâtonnet creux (1'), ladite substance nutritive (2) étant amenée à se dissoudre dans de l'eau, de façon à prolonger la durée de vie de fleurs coupées en vase, apte à retenir d'une manière libérable dans celui-ci la substance nutritive (2) pour fleurs, ledit bâtonnet creux (1') présentant une surface liée à une extrémité plane, formée par thermosoudage, afin de retenir la substance nutritive pour fleurs à l'intérieur dudit bâtonnet creux, **caractérisé en ce que** ledit bâtonnet creux est doté d'une rigidité suffisante pour agiter ladite eau, dans laquelle se disperse ladite substance nutritive pour fleurs, et pour servir de dispositif d'agitation, **en ce que** la dimension physique intérieure dudit bâtonnet creux (1') permet de contenir la quantité totale de ladite substance nutritive (2) pour fleurs, à savoir 4 à 20 grammes de substance nutritive pour fleurs, sous une forme sèche ou liquide, **en ce que** ledit bâtonnet creux (1') présente une section transversale et un diamètre de 4 à 10 mm, **en ce qu'**une épaisseur de paroi est choisie dans un intervalle de 0,1 à 1,0 mm, **en ce que** ledit bâtonnet creux (1') est apte à servir de moyen de fixation pour une étiquette informative (4, 5), **en ce que** ledit bâtonnet creux permet un dosage préalable approprié de substance nutritive, en fonction de la longueur des fleurs, et **en ce que** ledit bâtonnet creux est choisi avec une longueur longitudinale comprise entre 15 et 60 cm.

2. Conditionnement selon la revendication 1, **caractérisé en ce que** ledit bâtonnet creux a une forme, liée à sa section transversale, de cylindre, de poutre, de spirale, de cuillère ou de tige florale et présentant une section transversale circulaire ou ovale, carrée, rectangulaire ou en étoile.

3. Conditionnement selon la revendication 1 ou 2, **caractérisé en ce que** ledit bâtonnet creux présente des renforts tels que des nervures, des spirales ou autres éléments, afin d'améliorer ses propriétés de résistance mécanique et d'agitation.

4. Conditionnement selon la revendication 1, **caractérisé en ce que** ledit bâtonnet creux contient une substance nutritive qui est liée au volume moyen et minimal du vase utilisé.

5. Conditionnement selon la revendication 1, **caractérisé en ce que** ledit joint thermosoudé a une forme telle qu'il possède une surface d'agitation plane ou en ruban et qu'il est imperméable à l'eau mais peut facilement s'ouvrir.

6. Conditionnement selon la revendication 1, **caractérisé en ce que** ledit bâtonnet creux se présente sous la forme d'un tube en polypropylène.
